# EUROPÄISCHE PATENTSCHRIFT

(11) **EP 0 779 857 B1**
(45) Veröffentlichungstag und Bekanntmachung des Hinweises auf die Patenterteilung: **26.05.1999**
(21) Anmeldenummer: 95931944.3
(22) Anmeldetag: 31.08.1995
(51) Int. Cl.: B29C 73/02, B29C 73/28

(54) **VERFAHREN ZUM VERBINDEN VON KUNSTSTOFF-FORMTEILEN**
METHOD FOR JOINING PLASTIC MOLDINGS
PROCEDE D'ASSEMBLAGE DE PIECES MOULEES EN PLASTIQUE

(30) Priorität: 09.09.1994 DE 4432271
(43) Veröffentlichungstag der Anmeldung: 25.06.1997
(73) Patentinhaber: Henkel Teroson GmbH, 69123 Heidelberg (DE)
(72) Erfinder: SCHÄTZLE, Michael, D-69190 Walldorf (DE)
(86) Internationale Anmeldenummer: EP9503412
(87) Internationale Veröffentlichungsnummer: WO9607535

(56) Entgegenhaltungen:
- EP-A- 0 180 865
- EP-A- 0 315 101
- DE-A- 2 758 892
- FR-A- 2 321 386
- GB-A- 533 090
- DATABASE WPI Section PQ, Week 9527, Derwent Publications Ltd., London, GB; Class Q, AN 95-200649 (27) & BE,A,1 007 375 (H. LODEWYCKX) 30 Mai 1995
- DATABASE WPI Section Ch, Week 8337 Derwent Publications Ltd., London, GB; Class AP, AN 83-763858 (37) & SU,A,973 397 (V.I. KOLGANOV) , 25.November 1982

## Beschreibung

Die Erfindung betrifft ein Verfahren zum Verbinden von Kunststoff-Formteilen mit Hilfe von zumindest teilsweise in einem klebstoff eingebetteten metallischen Elementen. Verfahren dieser Art werden beispeilsweise zum Ausbessern von beschädigten Kunststoff-Formteilen verwendet.

In einer Reihe von Industriezweigen, insbesondere in der Automobilindustrie, werden zunehmend Formteile aus Metall durch solche aus Kunststoffen ersetzt. Dieser Einsatz von Kunststoff-Formteilen dient zum einen der Gewichtsersparnis und zum anderen der Vereinfachung von Fertigungsabläufen. In der Automobilindustrie werden z.B. Heckklappen von Automobilen, Kotflügelteile und insbesondere Stoßfänger aus Kunststoff-Formteilen in zunehmendem Umfang verwendet. Diese Kunststoff-Formteile können aus einer Vielzahl von verschiedenen Kunststoffen bzw. Verbundwerkstoffen bestehen, beispielhaft erwähnt seien Polyethylen, Polypropylen, Polycarbonat, Acrylnitrilbutadienstyrolterpolymere (ABS), Polyamid, Polyurethan, Polyepoxide, Polyester, letztere insbesondere in Form der Verbundwerkstoffe Sheet Moulding Compound (SMC) oder Bulk Moulding Compound (BMC). Außerdem kommen häufig sogenannte Polymerblends, wie z.B. die EPDM-modifizierten Polyethylene und Polypropylen-Werkstoffe zum Einsatz.

Beim Betrieb der mit diesen Kunststoff-Formteilen ausgerüsteten Maschinen, Apparate und insbesondere Fahrzeuge (Automobile) können diese Kunststoff-Formteile beschädigt werden. Insbesondere die Stoßfänger von Automobilen werden häufig bei Kraftfahrzeugunfällen beschädigt.

Bisher wurden die beschädigten Formteile in der Regel durch neue Teile ersetzt und nicht repariert.

Diese Vorgehensweise hat für den Verbraucher zwei entscheidende Nachteile: Zum einen sind die Kosten durch den Austausch des Teiles durch ein neues Teil erheblich höher, als wenn mit einfachen Methoden das Kunststoff-Formteil repariert würde, zum anderen muß das beschädigte Kunststoff-Formteil entsorgt werden. Diese bisher notwendige Entsorgung von sperrigen und voluminösen Teilen ist aus Umweltschutzgründen in hohem Maße unerwünscht, außerdem tragen die Entsorgungskosten zu einem maßgeblichen Teil zur Erhöhung der Reparaturkosten bei.

Es hat daher nicht an Versuchen gefehlt, Reparaturverfahren für die Reparatur derartig beschädigter Kunststoff-Formteile zu entwickeln, jedoch haben alle bisher bekannten Verfahren in der Praxis erhebliche Nachteile gezeigt.

Die EP-A-186081 schlägt für Karosserie-Reparaturen die Verwendung von Blechen vor, die mit Schmelzklebstoffen auf Basis thermoplastischer Copolymerer beschichtet sind, diese derartig beschichteten Bleche werden dann über die beschädigte Stelle geklebt. Dieses Verfahren ist jedoch nur für Blechteile und nicht für Kunststoff-Formteile verwendbar, da hier die zu reparierende Stelle auf Temperaturen vorgewärmt werden muß, bei denen der Schmelzklebstoff auf Basis von thermoplastischer Blockcopolymeren erweicht, d.h., es muß auf Temperaturen von oberhalb 100°C erwärmt werden. Viele Kunststoff-Formteile, insbesondere solche auf Basis von thermoplastischen Materialien, verlieren bei diesen Temperaturen ihre Formstabilität und ihre mechanischen Eigenschaften, so daß das in der EP-A-186081 vorgeschlagene Verfahren nicht für die Reparatur von Kunststoff-Formteilen geeignet ist.

Die EP-A-315101 beschreibt eine Methode zur Reparatur von beschädigten Artikeln aus Verbundwerkstoffen. Dabei wird die beschädigte Stelle des Verbundwerkstoffes durch Aufkleben von Metall oder ausgehärteten Verbundwerkstoff-Stücken auf die Fläche, die die beschädigte Fläche umgibt, ausgebessert. Als Klebstoff wird hier eine kautschukmodifizierte Vinylesterharz-Zusammensetzung vorgeschlagen. In einer anderen Ausführungsform wird ein ungehärtetes Verstärkungsmaterial mit einer kautschukmodifizierten Vinylesterharz-Zusammensetzung getränkt und über die vorbereitete beschädigte Zone gelegt und dort ausgehärtet. Als Verstärkungsmaterial werden Graphitfasergewebe bzw. Glasfasergewebe vorgeschlagen. Gemäß EP-A-315101 wird die beschädigte Zone vollflächig mit dem Metall bzw. Verbundwerkstoff überklebt. Es werden keine Angaben darüber gemacht, ob dieses Reparaturverfahren auch für die Reparatur von Kunststoff-Formteilen aus thermoplastischen Materialien geeignet ist.

Sehr häufig weisen die beschädigten Stellen von Kunststoff-Formteilen, insbesondere Stoßfänger von Automobilen längere Risse auf, die die mechanische Festigkeit des Formteils drastisch reduzieren. Versucht man, diese Stellen nach herkömmlichen Methoden des Standes der Technik durch vollflächige verstärkende Verklebung mit Blechteilen bzw. durch Verklebung unter Zuhilfenahme von Glasfaser-Geweben zu reparieren, so zeigt sich, daß die mechanischen Eigenschaften des derartig reparierten Formteils erheblich schlechter sind als die des ursprünglichen unbeschädigten Formteiis. Bei der großflächigen Verklebung mit Blechen beobachtet man, daß, z.B. beim Pendelschlagversuch, die Verklebung großflächig abplatzt, bei der Reparatur mit Hilfe von Glasfaser-Matten reißt beim Zugversuch unter Verwendung des Formteils die Verklebung an der ursprünglichen Rißstelle ein. Auch beim Pendelschlagversuch reißt das Fasergewebe an der ursprünglichen Rißstelle. Es bestand also Bedarf, ein Verfahren zu entwickeln, das die Reparatur von beschädigten Kunststoff-Formteilen, insbesondere solchen, wie sie in der Automobilindustrie verwendet werden, mit einfachen Mitteln ermöglicht. Dieses Verfahren sollte weiterhin gewährleisten, daß das reparierte Teil nicht nur optisch einwandfrei aussieht, sondern auch in seinen mechanischen Eigenschaften denen des neuen Teils gleichwertig ist.

Die SU-A-973397 beschreibt die Reparatur von Glasfaser-verstärkten Kunststoffrohren mit Hilfe von Flicken aus Glasfasergeweben und/oder kalthärtenden Klebstoffen sowie Schrauben zur Fixierung. Bei der Reparatur von stoßbelastbaren Kunststoff-Formteilen ist die Verwendung von Glasfaserflies zur Verstärkung der Klebstofffuge ungeeignet, da bei der Stoßbelastung Materialbruch aufritt.

Die FR-A-2321386 beschreibt einen Zink-Elastomer-Komplex bestehend aus einem Band aus Zink, das auf einer Seite mit einem klebrigen, nicht-polymerisierbaren Elastomeren beschichtet ist, das seinerseits mit einem Silikonpapier abgedeckt ist. Es wird vorgeschlagen, diesen Zink-Elastomer-Komplex zur Reparatur von metallischen Dachbelägen zu verwenden. Als weitere Anwendung wird vorgeschlagen bestimmte schwierige Bereiche besagter Dachbeläge mit diesem Zink-Elastomer-Komplex abzudichten. Über eine Reparatur von Kunststoff-Formteilen macht diese Schrift keinerlei Angaben.

Die EP-A-180865 beschreibt einen Reparatursatz zur Reparatur von Löchern in Platten aus Verbundmaterialien. Dieser Reparatursatz besteht aus einem Bolzen mit einer starren Unterlegscheibe mit etwa dem gleichen Durchmesser wie das zu reparierende Loch. Diese Unterlegschreibe wirkt auf eine geschlitzte Scheibe, die bedeutend größer als das zu reparierende Loch ist. Diese geschlitzte Scheibe kann so gebogen werden, daß die Schlitze geöffnet werden und dadurch kann diese Scheibe durch das engere Loch auf die unzugängliche Seite der Platte 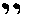 geschraubt" werden. Danach wird ein Satz von Harzimprägnierten Gewebeschichten durch das Loch hinter die geschlitzte Scheibe geschoben und gegen die Randbereiche des Loches auf der unzugänglichen Seite der Platte gedrückt. Anschließend wird das Loch mit Harz-imprägnierten Füllmaterial gefüllt oder es wird ein Stopfen aus einer ähnlichen Platte geschnitten und in das Loch gesetzt. Danach werden Schichten von Harz-imprägnierten Gewebematerial über das Füllmaterial auf der zugänglichen Seite der Platte gepreßt. Darauf wird eine Stützplatte auf den Bolzen gesetzt und die gesamte Anordnung wird mit Hilfe einer Schraube zusammengepreßt bis das Harz ausgehärtet ist. Danach wird die Schraube und die Halteplatte entfernt und der Bolzen wird bündig mit der zugänglichen Oberseite abgeschnitten. Ein Verfahren zur Reparatur von Kunststoff-Formteilen der anmeldungsgemäßen Art ist dieser Schrift nicht zu entnehmen.

Die DE-A-2758892 beschreibt ein Verfahren zum Reparieren der Wand eines Transportcontainers, die aus einer Holztafel mit ein- oder beidseitiger GFK-Beschichtung besteht. Gemäß der Lehre dieser Schrift soll die Schadensstelle ausgeschnitten werden, ggf. die Beschichtung im Bereich des Ausschnittes abgenommen werden. Anschließend wird eine Ersatzscheibe, die kleiner als der Ausschnitt ist, in dem Ausschnitt vorläufig fixiert und der Zwischenraum zwischen dem Scheibenumfang und der Leibung des Ausschnittes wird mit einem flüssigen Kunstharz ausgefüllt, das anschließend erstarrt. Die Fixierung des Ausschnittes kann mit Wellnägeln erfolgen, weiterhin wird offenbart, daß als Kunstharz ein Schmelzkleber verwendet wird. Über die Reparatur von Kunststoff-Formteilen, wie sie z.B. in der Automobilindustrie eingesetzt werden, macht diese Schrift keinerlei Angaben.

Die GB-A-533090 beschreibt ein Verfahren zum Reparieren von Gummi-Schmutzfängern, die im Randbereich eingerissen sind. Es wird vorgeschlagen, zur Reparatur dieser flexiblen Gummi-Formteile die Verwendung von Flicken aus flexiblem Material, z.B. Leinwand und Lösungen, die Kautschuk enthalten, zu verwenden. Gemäß der GB-A-533090 soll zwischen 2 Lagen derartiger Leinwandflicken in flexible metallische Elemente in Form von dicken Stahldrahtstücken eingebettet werden. Dabei sollen die Drahtstücke parallel zum Rand der Schmutzfänger angeordnet werden, damit die Flicken frei gebogen werden können. Durch diese Art der Anordnung soll offensichtlich gewährleistet werden, daß die derartig reparierten Schmutzfänger zumindest in einer Richtung hoch flexibel und biegsam bleiben.

Ausgehend von dem vorgenannten Stand der Technik bestand also die Aufgabe ein Verfahren zum Reparieren von beschädigten Kunststoff-Formteilen zu entwickeln, die den so reparierten Kunststoff-Formteilen eine ausreichende mechanische Festigkeit zurückgeben.

Die erfindungsgemäße Lösung der Aufgabe ist dem Patentanspruch 1 zu entnehmen. Sie besteht im wesentlichen darin, daß eine Kombination von schmalen Metallstreifen als Verstärkungsmittel und einem ein- oder zweikomponentigen Klebstoff eine Reparatur von Kunststoff-Formteilen dergestalt ermöglicht, daß diese ihre ursprünglichen mechanischen Gebrauchseigenschaften zurückbekommen.

Die Erfindung betrifft also ein Verfahren zum Verbinden von Kunststoff-Formteilen mit Hilfe eines ein- oder zweikomponentigen Klebstoffes, wobei die Verbindungsfuge durch mindestens einen Metallstreifen überbrückt ist und dieser oder diese Metallstreifen zumindest teilweise in die Klebstoffschicht eingebettet ist/sind.

Ein weiterer Gegenstand der Erfindung ist ein Verbund von Kunststoff-Formteilen gemäß Anspruch 7, der mit Hilfe eines ein- oder zweikomponentigen Klebstoffes hergestellt wurde, wobei die Verbindungsfuge durch mindestens einen Metallstreifen überbrückt ist und dieser/diese Metallstreifen zumindest teilweise in die Klebstoffschicht eingebettet ist/sind.

Zweckmäßige Weiterbildungen der Erfindung sind in den abhängigen Ansprüchen 2 bis 6 beschrieben.

Für dieses Reparatur-Verfahren geeignet sind alle Formteile aus Kunststoffen, wie sie z.B. im Automobilbau verwendet werden:
Kautschukmodifizierte Polyolefine, insbesondere EPDM-modifiziertes Polyethylen und/oder Polypropylen, Polycarbonat, ABS, Polyamid, Polyurethan, Faserverstärkte Kunststoffe wie z.B. SMC oder BMC.

Als Klebstoffe eignen sich für die erfindungsgemäßen Reparaturverfahren alle ein- bzw. zweikomponentigen Konstruktionsklebstoffe (structural adhesive), sofern sie in einem Temperaturbereich von Raumtemperatur bis etwa maximal 90°C mit ausreichender Geschwindigkeit aushärten. Beispiele für derartige Klebstoffe sind ein- oder zweikomponentige Epoxyklebstoffe, ungesättigte Polyester in Kombination mit Styrol und/oder Methacrylaten, (Meth)acrylat-Klebstoffe und insbesondere zweikomponentige Polyurethan-Klebstoffe.

Zur Gewährleistung einer dauerhaften und voll belastbaren Verklebung ist in der Regel eine Vorbeschichtung des Kunststoffteils mit einem haftvermittelnden Primer, z.B. auf der Basis von chloriertem Polyolefin zweckmäßig.

Als verstärkende Metallstreifen eignen sich Federstahl, Aluminium und ganz besonders elektrolytisch verzinktes Stahlblech, wie es beispielsweise im Karosseriebau verwendet wird. Die Metallstreifen können zusätzlich zu der Verzinkung oder anstelle der Verzinkung durch andere gängige Methoden Oberflächen-vorbehandelt sein. Hierzu zählen z.B. Beschichtung mit sogenannten Grundierungen, Elektrotauchlackierungen, Phosphatierungen und/oder Lackierungen.

Die Abmessungen und die Anzahl der pro Reparaturverklebung zu verwendenden Metallstreifen können in breiten Grenzen variieren und richten sich nach der Größe der zu reparierenden Stelle und nach den Festigkeiten, die die Verklebung erreichen muß. Die Dicke der Metallstreifen kann zwischen 0,2 und 1,5 mm variieren, vorzugsweise zwischen 0,2 und 1,0 mm, ganz besonders bevorzugt sind die im Automobilbau verwendeten Blechstärken von 0,6 bis 0,9 mm. Länge und Breite der Metallstreifen richten sich nach der zu überbrückenden Klebefuge, die Länge kann zwischen 30 und 200 mm variieren, die Breite zwischen 5 und 20 mm. In einer ganz besonderen Ausführungsform sind die Metallstreifen zwischen 60 und 90 mm lang und 10 mm breit. Bei der Reparatur von rißförmigen Beschädigungen wird mindestens ein Metallstreifen am Anfang des Risses verklebt, vorzugsweise werden jedoch in weitgehend gleichmäßigen Abständen über die gesamte Länge des Risses Metallstreifen auf der Rückseite des beschädigten Formteils in die Klebstoffschicht eingebettet. Eine weitere Möglichkeit der erfindungsgemäßen Verklebung ist eine Kombination von Metallstreifen und Fasermatten als Verstärkungsmittel, wobei mindestens ein Metallstreifen am Anfang des Risses eingeklebt werden sollte. Obwohl auch die Metallstreifen der Form des zu reparierenden Kunststoff-Teils angepaßt werden können, kann die Mitverwendung von Glasfaser-Matten oder Textilgeweben zweckmäßig sein, wenn die zu verklebende Schadstelle eine komplizierte Formgebung aufweist, oder wenn Teile der zu verstärkenden Reparaturstellen im Sichtbereich liegen, so daS eine sehr glatte Verklebung notwendig wird.

Die Aushärtung der Verklebung kann dabei gegebenenfalls durch Erwärmung der Klebestelle auf Temperaturen bis zu 90°C, vorzugsweise bis etwa 70°C beschleunigt werden, so daß das verklebte Teil bereits nach sehr kurzer Zeit weiterbearbeitet werden kann, z.B. geschliffen und lakkiert werden kann. Die Erwärmung kann dabei durch alle bekannten Wärmequellen, insbesondere durch Verwendung von Heißluftgebläsen oder IR-Strahler erfolgen.

Die erfindungsgemäße Verklebung der Formteile ist auch aus Gründen des Umweltschutzes sehr vorteilhaft, da die derartige verklebten Formteile aus thermoplastischen Kunststoffen voll recyclingfähig bleiben: Bei einer Zerkleinerung im z.B. Shredder und nachfolgender Granulierung stören die ausgehärteten Klebstoffreste die Wiederverwendung des Kunststoffgranulats nicht, die Metallteile, insbesondere Stahlteile können durch gängige Separierungsmethoden wie z.B. elektromagnetische Abscheidung oder Windsichtung aus dem Granulat entfernt werden.

Anhand der nachfolgenden Beispiele soll die Erfindung näher erläutert werden:

Zur Simulation eines Risses wurden zwei Prüfkörper aus EPDM-modifiziertem Polypropylen mit den Abmessungen 25x60x5 mm auf der zu verklebenden Fläche mit Schleifpapier aufgerauht und mit einem Primer auf Basis eines modifizierten chlorierten Polypropylens (Handelsname Terokal 150, Teroson) eingestrichen. Die beiden Prüfkörper wurden sodann an ihrer kurzen Kante auf Stoß gegenübergelegt und die Klebstofffläche mit einer Raupe eines zweikomponentigen Polyurethan-Klebstoffes (Terokal 9225, Fa. Teroson) beschichtet. In diese Klebstoffschicht wurden dann Metallstreifen gelegt und diese mit den Fingern leicht in die Klebstoffschicht hineingedrückt. Nach drei Tagen bei Raumtemperatur wurde die Verklebung einer Pendelschlagprüfung in Anlehnung an DIN 51222 unterworfen. Die Ergebnisse sind in der nachfolgenden Tabelle aufgeführt.

### Erfindungsgemäße Versuche:

| Metallstreifen | Abmessung [mm] | Schlagarbeit [Einheiten] | Beurteilung |
|---|---|---|---|
| Federstahl geh. 0,4mm | 100x25 | 14,8 | i.O. |
| Federstahl geh. 0,3mm | 100x25 | 13,6 | i.O. |
| Federstahl geh. 0,2mm | 100x25 | 14,5 | i.O. |
| Federstahl geh. 0,4mm | 100x12,5 | 13,5 | i.O. |
| Federstahl geh. 0,3mm | 100x12,5 | 13,9 | i.O. |
| Federstahl geh. 0,2mm | 100x12,5 | 14,1 | i.O. |
| Elektr.verzinkt. Stahl, 0,7mm | 80x12,5 | 13,8 | i.O. |
| Elektr.verzinkt. Stahl, 0,7mm | (80x12,5)x2 | 14,0 | i.O. |
| Elektr.verzinkt. Stahl, 0,7mm | 80x8 | 13,6 | i.O. |
| Elektr.verzinkt. Stahl, 0,7mm | (80x8)x2 | 14,5 | i.O. |

### Vergleichsversuch:

| Material | Abmessung [mm] | Schlagarbeit | Beurteilung |
|---|---|---|---|
| Glasfaservlies | 100x25 | Materialbruch | n.i.O. |
| Glasfaservlies | 80x25 | Materialbruch | n.i.O. |
| Glasfaservlies | 60x25 | Materialbruch | n.i.O. |
| Glasfaservlies | 80x12,5 | Materialbruch | n.i.O. |
| Glasfaservlies | 80x8 | Materialbruch | n.i.O. |

### Praxisversuche:

In einem Praxisversuch wurde ein beschädigter Stoßfänger aus EPDM-modifiziertem Polyethylen, der einen Riß von 670 mm Länge hatte, erfindungsgemäß unter Verwendung von 16 elektrolytisch verzinkten Stahlblechstreifen der Abmessungen 40x25 mm verklebt und ein Crash-Test nach den Spezifikationen der Fa. Opel durchgeführt. Der Stoßfänger entsprach voll den Herstellerspezifikationen, d.h. er überstand den Crash-Test ohne Beschädigung.

### Vergleichsversuche:

Ein Stoßfänger gleichen Typs mit gleicher Rißform und Abmessung wurde mit Hilfe von Glasfaservlies geklebt. Der Crash-Test wurde nicht bestanden, der Stoßfänger riß an der Stelle der ursprünglichen Beschädigung erneut ein.

Ein Stoßfänger gleichen Typs mit gleicher Rißform und Abmessung wurde mit Hilfe eines einzigen großflächigen Stahlbleches von 40x150 mm geklebt. Bei der vorbereitenden Handhabung zum Crash-Test löste sich die Verklebung bereits aufgrund der geringfügigen Verwindung des Formteils. Aus den oben beschriebenen Versuchen geht eindeutig hervor, daß nur die erfindungsgemäßen Verklebungen eine volle Gebrauchstauglichkeit der verklebten Formkörper gewährleisten.

### Anmerkung zu den Versuchen:

i.O.: Verklebung in Ordnung
Materialbruch im Glasfaservlies
n.i.O.: Verklebung nicht in Ordnung.
Bei den Pendelschlag-Versuchen war das Schlagpendel mit 15 Kp beaufschlagt.

## Patentansprüche

1. Verfahren zum Verbinden von Kunststoff-Formteilen mit Hilfe von zumindest teilweise in einen Klebstoff eingebetteten metallischen Elementen, **dadurch gekennzeichnet**, daß die Verbindungsfuge durch mindestens einen Metallstreifen als metallisches Element überbrückt ist, wobei der Klebstoff aus der Gruppe der ein- oder zweikomponentigen Epoxyklebstoffe, Polyurethanklebstoffe, ungesättigte Polyester oder (Meth)acrylat-Klebstoffe ausgewählt wird.

2. Verfahren nach Anspruch 1, **dadurch gekennzeichnet**, daß es zum Ausbessern von beschädigten Kunststoff-Formteilen verwendet wird.

3. Verfahren nach mindestens einem der vorhergehenden Ansprüche, **dadurch gekennzeichnet**, daß als Metallstreifen Streifen aus elektrolytisch verzinktem und/oder grundiertem und/oder lackiertem Stahlblech verwendet werden.

4. Verfahren nach mindestens einem der vorhergehenden Ansprüche, **dadurch gekennzeichnet**, daß die Metallstreifen 30 bis 200 mm lang und 5 bis 20 mm breit sind und 0,2 bis 1,0 mm dick sind.

5. Verfahren nach mindestens einem der vorherigen Ansprüche, **dadurch gekennzeichnet**, daß das Kunststoff-Formteil vor der Verklebung auf den zu verklebenden Stellen mit einem haftvermittelnden Primer beschichtet wird.

6. Verfahren nach mindestens einem der vorhergehenden Ansprüche, **dadurch gekennzeichnet**, daß die Verklebung nach Klebstoffauftrag auf 30°C bis 90°C erwärmt wird.

7. Verbund von Kunststoff-Formteilen, dadurch hergestellt, daß die Verbindungsfuge durch mindestens einen Metallstreifen überbrückt ist und daß diese(r) Metallstreifen zumindest teilweise in die Klebstoffschicht eingebettet ist wobei der Klebstoff aus der Gruppe der ein- oder zweikomponentigen Epoxyklebstoffe, Polyurethanklebstoffe, ungesättigte Polyester oder (Meth)acrylat-Klebstoffe ausgewählt wird und daß die Verklebung nach dem Klebstoffauftrag auf 30 ° C bis 90 ° C erwärmt wird.

## Claims

1. A process for joining plastic moldings using metallic elements at least partly embedded in an adhesive, characterized in that the connecting joint is spanned by at least one metal strip as the metallic element, the adhesive being selected from the group of one- or two-component epoxy adhesives, polyurethane adhesives, unsaturated polyesters or (meth)acrylate adhesives.

2. A process as claimed in claim 1, characterized in that it is used to repair damage to plastic moldings.

3. A process as claimed in at least one of the preceding claims, characterized in that strips of electrolytically galvanized and/or primed and/or painted steel plate are used as the metal strips.

4. A process as claimed in at least one of the preceding claims, characterized in that the metal strips are 30 to 200 mm long, 5 to 20 mm wide and 0.2 to 1.0 mm thick.

5. A process as claimed in at least one of the preceding claims, characterized in that, before bonding, the plastic molding is coated with an adhesion-promoting primer over the surfaces to be bonded.

6. A process as claimed in at least one of the preceding claims, characterized in that, after application of the adhesive, the bond is heated to a temperature of 30 to 90°C.

7. A composite structure of plastic mouldings made by a process in which the connecting joint is spanned by at least one metal strip as the metallic element and the metal strip(s) is/are at least partly embedded in the adhesive layer, the adhesive being selected from the group of one- or two-component epoxy adhesives, polyurethane adhesives, unsaturated polyesters or (meth)acrylate adhesives and the bond being heated to a temperature of 30°C to 90°C after application of the adhesive.

## Revendications

1. Procédé d'assemblage d'articles moulés en matière synthétique à l'aide d'éléments métalliques au moins partiellement enrobés dans un adhésif,
caractérisé en ce que
le joint de liaison est recouvert par au moins un ruban métallique en tant qu'élément métallique, et l'adhésif est choisi dans le groupe à un ou deux composants des adhésifs époxydes, des adhésifs de polyuréthane, des polyesters insaturés, des adhésifs de (méth)acrylate.

2. Procédé selon la revendication 1,
caractérisé en ce qu'
on l'utilise pour réparer des articles moulés en matière plastique endommagés.

3. Procédé selon au moins une des revendications précédentes,
caractérisé en ce qu'
on utilise comme ruban métallique des rubans de tôle d'acier zingué par électrolyse et/ou munis d'une couche de fond et/ou vernis.

4. Procédé selon au moins une des revendications précédentes,
caractérisé en ce que
les rubans métalliques ont une longueur de 30 à 200 mm, une largeur de 5 à 20 mm et une épaisseur de 0,2 à 1,0 mm.

5. Procédé selon au moins une des revendications précédentes,
caractérisé en ce qu'
on recouvre l'article moulé en matière plastique d'un apprêt favorisant l'adhérence avant l'encollage aux endroits où le collage doit se faire.

6. Procédé selon au moins une des revendications précédentes,
caractérisé en ce que
le collage est chauffé à 30°C à 90°C après dépôt de l'adhésif.

7. Composite de pièces moulées en matière plastique,
caractérisé en ce que
le joint de liaison est recouvert par au moins un ruban métallique et en ce que ce ou ces rubans métalliques est ou sont au moins partiellement enrobé(s) dans la couche d'adhésif, l'adhésif étant choisi dans le groupe à un ou deux composants, constitué par les adhésifs époxydes, les adhésifs de polyuréthane, les polyesters insaturés ou les adhésifs de (méth)acrylate, et en ce que le collage est chauffé à 30°C à 90°C après dépôt de l'adhésif.
